# EUROPÄISCHE PATENTANMELDUNG

(11) **EP 1 702 774 A1**
(43) Veröffentlichungstag der Anmeldung: **20.09.2006**
(21) Anmeldenummer: 06014057.1
(22) Anmeldetag: 10.05.2002
(51) Int. Cl.: B60H 1/22

(54) **Luftheizgerät und Verfahren zum Erkennen rückströmender Heizluft**

(30) Priorität: 18.06.2001 DE 10129205; 04.03.2002 DE 10209519
(62) Teilanmeldung aus: 05003293.7
(71) Anmelder: Webasto AG, 82131 Stockdorf (DE)
(72) Erfinder: Elm, Nils, 82152 Krailling (DE); Ludwig, Andreas, 82377 Penzberg (DE); May, Andreas, 81245 München (DE); Gerhardt, Nikolaus, 85764 Oberschleissheim (DE); Widemann, Friedrich, 81241 München (DE)
(74) Vertreter: Schumacher & Willsau

(57) **Zusammenfassung**

Die Erfindung betrifft ein Heizsystem zum Erwärmen von Luft, insbesondere zum Beheizen des Innenraums eines Kraftfahrzeugs, mit einer ersten Heizung (10), einer zweiten Heizung (12) und einem Strömungsweg zwischen der ersten Heizung (10) und der zweiten Heizung (12), wobei ein Zusatzgebläse (50) vorgesehen ist, mit dem eine Strömung in die Richtung von der zweiten Heizung (12) zu der ersten Heizung (10) erzeugbar ist. Die Erfindung betrifft ferner ein Verfahren zum Beeinflussen von Luftströmungen in einem Heizsystem. Die Erfindung betrifft weiterhin ein Luftheizgerät sowie ein Verfahren zum Erkennen rückströmender Heizluft durch ein Luftheizgerät, wobei ein Temperatursensor im Lufteintrittsbereich des Luftheizgerätes vorgesehen ist und beim Überschreiten eines Grenzwertes durch eine temperaturabhängige Größe der Brenner des Luftheizgerätes in einen Zustand mit niedrigerer Heizleistung überführt wird.

## Beschreibung

Die Erfindung betrifft ein Luftheizgerät mit einem Brenner, einem Wärmeübertrager, einem Lufteintrittsbereich, einem Luftaustrittsbereich, einem Steuergerät und einem im Lufteintrittsbereich angeordneten Temperatursensor, wobei die Temperatur im Lufteintrittsbereich mittels des im Lufteintrittsbereich angeordneten Temperatursensors überwacht wird und beim Überschreiten eines Grenzwertes durch eine temperaturabhängige Größe der Brenner in einen Zustand mit niedrigerer Heizleistung überführt wird. Ebenfalls betrifft die Erfindung ein Verfahren zum Erkennen rückströmender Heizluft durch ein Luftheizgerät.

Insbesondere im Kraftfahrzeugbereich ist es bekannt, gattungsgemäße Heizsysteme und gattungsgemäße Verfahren einzusetzen. Diese zeichnen sich durch das Zusammenwirken einer ersten Heizung - der Fahrzeugheizung beziehungsweise einer Kombination aus Fahrzeugheizung und Klimaanlage - und einer zweiten Heizung - der Luftzusatzheizung - aus. Die Fahrzeugheizung beziehungsweise die Kombination aus Fahrzeugheizung und Klimaanlage wird auch als "Frontbox" bezeichnet. Die Kombination aus Fahrzeugheizung und Klimaanlage ist auch als HVAC ("Heat Ventilation Air Condition") bekannt. Wenn im Folgenden bei der Beschreibung des Standes der Technik und bei der Beschreibung der Erfindung von einer Fahrzeugheizung die Rede ist, so sind stets auch Kombinationen einer Fahrzeugheizung mit einer Klimaanlage gemeint.

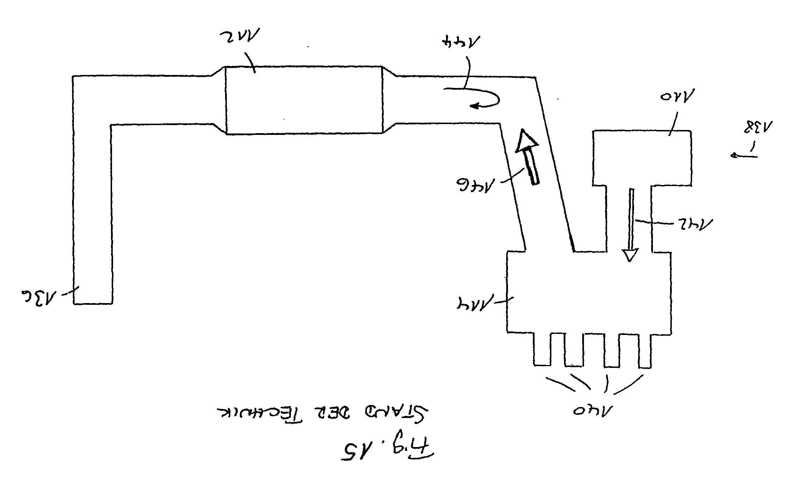

Figur 14 zeigt schematisch den Aufbau eines Systems des Standes der Technik. Eine Fahrzeugheizung 110 mit einem Lufteintritt 138, der nicht näher dargestellt ist, steht mit einer Mischkammer 114 in Verbindung. Weiterhin ist eine Zusatzheizung 112 vorgesehen, die einen Lufteintritt 136 aufweist. Auch die Zusatzheizung 112 steht mit der Mischkammer 114 in Verbindung. Die Mischkammer 114 weist mehrere Luftkanäle 140 für den Austritt von Luft auf. Im Allgemeinen besteht in der Mischkammer 114 die Möglichkeit, den dort eintretenden Volumenstrom über Klappen in die unterschiedlichen Luftkanäle 140 umzuleiten oder Luftkanäle 140 abzuschließen. Auf diese Weise wird dem Benutzer die Möglichkeit gegeben, umfangreiche Einstellungen zur Klimatisierung des Innenraums eines Kraftfahrzeugs vorzunehmen.

Beim normalen Betrieb des Heizsystems gemäß Figur 14 tritt ein Luftstrom 142 aus der Fahrzeugheizung 110 aus und in die Mischkammer 114 ein. Ebenso tritt ein Luftstrom 144 aus der Zusatzheizung 112 aus und in die Mischkammer 114 ein. Aufgrund dieser an sich voneinander unabhängigen Luftströmungen 142, 144 kann eine Gegenkopplung resultieren, die beispielsweise zu dem Gegendruck 146 gegen die Strömung 144 der Zusatzheizung 112 führen kann. In Figur 14 hat der Gegendruck 146 einen geringen Betrag, so dass ein ordnungsgemäßes Arbeiten des Heizsystems möglich ist.

In Figur 15 ist ein System dargestellt, welches vom Aufbau her demjenigen aus Figur 14 entspricht. Im Unterschied zu dem in Figur 14 schematisch dargestellten Betriebszustand arbeitet das Heizsystem gemäß Figur 15 nicht ordnungsgemäß. Dies resultiert aus dem erhöhten Gegendruck 146, der im dargestellten Fall so groß ist, dass er eine Umkehr der Luftströmung 144 bewirkt.

Das Entstehen der in Figur 14 beziehungsweise in Figur 15 schematisch dargestellten Betriebszustände und die daraus resultierende Problematik wird nachfolgend erläutert.

Die Fahrzeugheizung besitzt ein Gebläse, das mit hohem Volumenstrom und relativ geringer Drucksteifigkeit Luft in die Mischkammer einbläst. Unter dem Begriff Drucksteifigkeit ist das Potential eines Druckaufbaus zu verstehen. Eine hohe Drucksteifigkeit steht beispielsweise für das Potential, einen hohen Druck aufzubringen. Das Gebläse der Fahrzeugheizung kann stufenlos oder in Stufen geregelt werden, wobei diese Regelung insbesondere unabhängig von den thermodynamischen Zuständen in dem Heizsystem vorgenommen werden kann.

Auch die Zusatzheizung besitzt ein Gebläse. Dieses ist im Gegensatz zu dem Gebläse der Fahrzeugheizung relativ drucksteif, wobei jedoch ein geringerer Volumenstrom erzeugt wird. Bei gängigen Zusatzheizungen kann das Gebläse der Zusatzheizung prinzipbedingt nicht unabhängig von der Heizleistung der Zusatzheizung geregelt werden. Wenn mehr Heizleistung benötigt wird, so steigt auch der Volumenstrom an und umgekehrt. Aufgrund der Änderung des Volumenstroms der Zusatzheizung ändert sich aber auch die Drucksteifigkeit.

Die Ausblastemperatur an der Zusatzheizung ist unter anderem abhängig von den der Zusatzheizung entgegenwirkenden Widerständen. Dies kann bei hohem Widerstand zu einer erhöhten Ausblastemperatur führen, die durch Herunterregeln oder Abschalten der Zusatzheizung begrenzt wird.

Für den Betrieb der Zusatzheizung ist es daher ideal, wenn sie bei niedrigen Außentemperaturen mit hohen Heizleistungen, das heißt hohen Volumenströmen und somit hoher Drucksteifigkeit laufen kann. Die Zusatzheizung kann dann dem Gebläse der Fahrzeugheizung entgegenwirken, insbesondere wenn letzteres mit niedrigen Gebläsestufen betrieben wird beziehungsweise wenn nur wenige Klappen in der Mischkammer geschlossen sind.

Problematisch ist allerdings, wenn die Zusatzheizung aufgrund steigender Temperaturen die Heizleistung absenken muss. Aufgrund der vorstehend erläuterten Gesetzmäßigkeiten sinkt dann auch die Drucksteifigkeit und mithin die Möglichkeit, dem Fahrzeuggebläse ausreichend entgegenzuwirken. Ein solcher Zustand hat wiederum zur Folge, dass der Widerstand für die Zusatzheizung immer höher wird und die Zusatzheizung immer weiter die Heizleistung herunterregelt. Dies kann dazu führen, dass der Gegendruck, der durch das Fahrzeugheizungsgebläse erzeugt wird, höher ist als der Druck der Zusatzheizung. Dieser Zustand wird auch als Überdrückung bezeichnet. Die Wärme der Zusatzheizung kann dann nicht mehr abgefördert werden. Im Extremfall wird sie in die umgekehrte Richtung transportiert. Dies kann dazu führen, dass ein im Allgemeinen im Auslassbereich der Zusatzheizung angeordneter Überhitzungsschutz außer Kraft gesetzt werden kann. Weiterhin kann es zu gravierenden Schäden am gesamten System kommen, beispielsweise im Einlassbereich beziehungsweise am Steuergerät der Zusatzheizung.

Die US 4,726,514 beschreibt ein gattungsgemäßes Luftheizgerät.

Der Erfindung liegt die A u f g a b e zugrunde, ein Heizsystem und ein Verfahren zur Verfügung zu stellen, welche die genannten Nachteile ausräumen und welche insbesondere eine Überdrückung in dem Heizsystem vermeiden.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Luftheizgerät dadurch auf, dass als temperaturabhängige Größe der zeitliche Temperaturgradient verwendet wird. Auf diese Weise wird der im Normalbetrieb zur Bestimmung der Lufteintrittstemperatur genutzte Temperatursensor im Lufteintrittsbereich des Luftheizgerätes dazu verwendet, eine Rückströmung von aufgeheizter Luft zu ermitteln. Dies erfolgt über die Bestimmung einer temperaturabhängigen Größe. Falls diese temperaturabhängige Größe einen bestimmten Grenzwert überschreitet, können Gegenmaßnahmen ergriffen werden, bei denen insbesondere der Brenner in einen Zustand mit niedrigerer Heizleistung überführt wird. Folglich wird einer unerwünschten Überhitzung elektronischer Komponenten, beispielsweise im Bereich des Steuergerätes, entgegengewirkt. Die Geschwindigkeit des Temperaturanstiegs kann daher als Kriterium verwendet werden, da ein quasi schlagartiger Temperaturanstieg auf eine einsetzende Strömungsumkehr schließen lässt. Durch die Überwachung des Temperaturgradienten lässt sich daher frühzeitig eine Gegenmaßnahme gegen die Strömungsumkehr beziehungsweise gegen eine Überhitzung der im Eintrittsbereich vorhandenen Komponenten ergreifen.

Beispielsweise kann das erfindungsgemäße Luftheizgerät in der Weise verwendet werden, dass beim Überschreiten eines Grenzwertes durch eine temperaturabhängige Größe der Brenner abgeschaltet wird. Folglich wird eine weitere Erwärmung von Heizluft auf ein Minimum zurückgeführt, wodurch eine besonders effektive Gegenmaßnahme zur Verfügung gestellt wird.

Ebenfalls ist es zusätzlich zur Gradientenauswertung möglich, dass als temperaturabhängige Größe die Temperatur selbst verwendet wird, so dass beim Überschreiten einer maximalen Temperatur der Brenner abgeschaltet wird. Steigt beispielsweise die Temperatur im Bereich des Temperatursensors im Lufteintrittsbereich nur langsam an, so ist hierdurch eine zusätzliche Sicherheit gegeben.

Ebenfalls ist es möglich, dass mit beziehungsweise nach dem Überführen des Brenners in einen Zustand mit niedrigerer Heizleistung ein Kühlnachlauf durchgeführt wird. Ein solcher Kühlnachlauf bewirkt, dass eventuell bereits in einem kritischen Temperaturzustand befindliche Komponenten rasch wieder abgekühlt werden können, so dass danach wieder in einen normalen Brennerbetrieb übergegangen werden kann.

Die Erfindung besteht weiterhin in einem Verfahren zum Erkennen rückströmender Heizluft durch ein Luftheizgerät, bei dem die Temperatur in einem Lufteintrittsbereich mittels eines im Lufteintrittsbereich angeordneten Temperatursensors überwacht wird und beim Überschreiten eines Grenzwertes durch eine temperaturabhängige Größe der Brenner des Luftheizgerätes in einen Zustand mit niedrigerer Heizleistung überführt wird, wobei als temperaturabhängige Größe der zeitliche Temperaturgradient verwendet wird. Auf diese Weise werden die im Zusammenhang mit dem erfindungsgemäßen Luftheizgerät geschilderten Vorteile auch im Rahmen eines Verfahrens umgesetzt. Dies gilt auch für die nachfolgend angegebenen vorteilhaften Ausführungsformen des erfindungsgemäßen Verfahrens zum Erkennen rückströmender Heizluft.

Das erfindungsgemäße Verfahren ist besonders dann vorteilhaft, wenn beim Überschreiten eines Grenzwertes durch eine temperaturabhängige Größe der Brenner abgeschaltet wird.

Weiterhin kann das erfindungsgemäße Verfahren besonders dadurch vorteilhaft ausgelegt sein, dass zusätzlich zur Gradientenauswertung als temperaturabhängige Größe die Temperatur selbst verwendet wird, so dass beim Überschreiten einer maximalen Temperatur der Brenner abgeschaltet wird.

Ebenfalls kann es im Rahmen des erfindungsgemäßen Verfahrens nützlich sein, dass mit beziehungsweise nach dem Überführen des Brenners in einen Zustand mit niedriger Heizleistung ein Kühlnachlauf durchgeführt wird.

Es kann vorgesehen sein, dass mindestens ein Zusatzgebläse vorgesehen ist, mit dem eine Strömung in die Richtung von der zweiten Heizung zu der ersten Heizung erzeugbar ist. Auf diese Weise ist es möglich, den Volumenstrom beziehungsweise den Druck von der zweiten Heizung in Richtung der Fahrzeugheizung so weit zu erhöhen, dass die zweite Heizung unter beliebigen Bedingungen nicht überdrückt wird. Ferner ist keine Verdämmung der Strömungsverbindung zwischen der zweiten Heizung und der Fahrzeugheizung erforderlich, wobei gleichwohl ein stabiler und schonender Heizgerätebetrieb gewährleistet wird. Auf diese Weise kann auch bei niedrigen Drehzahlen der zweiten Heizung eine Überdrückung verhindert werden. Im zweiten Heizgerät herrschen durchschnittlich geringere Temperaturen, so dass die Bauteile weniger belastet werden. Es kann ein gleichmäßiger Betrieb der zweiten Heizung stattfinden, der insbesondere weniger Regelzyklen erfordert, wodurch ein Brenner in der zweiten Heizung weniger belastet wird. Weiterhin kann der Wärmeenergiebeitrag der zweiten Heizung erhöht werden, da die Maximalheizleistung größer wird. Es kann ein sauberer Start- und Ausbrennzyklus gewährleistet werden. Da es nicht erforderlich ist, die Strömungsverbindung zwischen der ersten Heizung und der zweiten Heizung zu unterbrechen, wird die Wärmeenergie aus der zweiten Heizung stets optimal ausgenutzt.

Die Erfindung entfaltet ihre Vorteile besonders dadurch, dass die erste Heizung eine Fahrzeugheizung ist und dass die zweite Heizung eine Zusatzheizung ist. Die Erfindung ist in vorteilhafter Weise für das Zusammenspiel von Heizungen in beliebigen Umgebungen einsetzbar. Besondere Vorzüge ergeben sich aber beim Einsatz in einem Kraftfahrzeug. Dort werden Zusatzheizungen häufig mit Fahrzeugheizungen beziehungsweise mit Fahrzeugheizungssystemen kombiniert, die sich bereits in der Anwendung befinden. Die Erfindung eröffnet durch die Bereitstellung stabiler Strömungsbedingungen der einzubindenden Zusatzheizung in ein Fahrzeugsystem eines Kraftfahrzeugs die Möglichkeit einer problemlosen Integration.

Vorzugsweise ist mindestens eine Mischkammer vorgesehen, in die aus der mindestens einen ersten Heizung und aus der mindestens einen zweiten Heizung ausgeströmte Luft eintreten kann. Eine solche Mischkammer ist nützlich, um Luft mit einer einheitlichen Temperatur in den Innenraum des Kraftfahrzeugs einzuleiten. Die Verbindung der Fahrzeugheizung mit der Zusatzheizung besteht dann im Allgemeinen über diese Mischkammer, wobei es auch dann zu der Problematik der Überdrückung kommen kann. Insbesondere weist eine Mischkammer häufig Klappen auf, mit denen Kanäle ganz oder teilweise verschlossen werden können, so dass der Gegendruck gegen die Strömung aus der Zusatzheizung sehr hoch werden kann.

Es ist besonders vorteilhaft, dass das Zusatzgebläse vor der zweiten Heizung angeordnet ist. Diese Position ist zu bevorzugen, da auf diese Weise das Zusatzgebläse keiner Wärmebelastung ausgesetzt wird. Ebenfalls ist es denkbar, das Zusatzgebläse in den Bereich eines Lufteintritts für die Zusatzheizung zu verlegen. Es liegt jedoch auch im Umfang der vorliegenden Erfindung, ein Zusatzgebläse hinter der Zusatzheizung anzuordnen. Dies ist insbesondere dann möglich, wenn man ein Zusatzgebläse wählt, das einer höheren Wärmebelastung standhält.

In einer weiteren besonders bevorzugten Ausführungsform ist das erfindungsgemäße Heizsystem dadurch weitergebildet, dass das Zusatzgebläse in Abhängigkeit eines Ausgangssignals eines Steuergerätes betätigbar ist. Ein solches Steuergerät kann zahlreiche Eingangsdaten bei der Entscheidung, ob das Zusatzgebläse zu betätigen ist, einbeziehen. Dabei kommen Eingangssignale in Frage, die direkt mit dem Heizsystem in Verbindung stehen. Es können aber auch andere Signale verwertet werden, beispielsweise CAN-Bus-Signale.

Es ist von besonderem Vorteil, dass zum Erfassen von Druckzuständen in dem Heizsystem mindestens ein Drucksensor zum Erzeugen eines Eingangssignals für ein Steuergerät vorgesehen ist. Ein solcher Drucksensor kann beispielsweise als Differenzdrucksensor ausgelegt sein, wobei die Differenz zwischen dem Druck vor dem Zusatzheizgerät und dem Druck im beziehungsweise nach dem Zusatzheizgerät gemessen wird. Bei zu hoher Differenz liegt mit hoher Wahrscheinlichkeit eine Überdrückung vor, so dass von dem Steuergerät Maßnahmen eingeleitet werden können, beispielsweise das Zuschalten des Zusatzgebläses. Allerdings ist zu bemerken, dass die Druckdifferenz nicht in jedem Fall ein spezifisches Merkmal für eine Verdämmung ist. Es ist auch möglich, dass bei niedrigen Drücken eine Verdämmung auftritt. Ebenfalls kann beispielsweise bei hohen Drehzahlen ein hoher Druck ohne Verdämmung vorliegen.

Im gleichen Sinne ist es zu bevorzugen, dass zum Erfassen von Temperaturzuständen in dem Heizsystem mindestens ein Temperatursensor zum Erzeugen eines Eingangssignals für ein Steuergerät vorgesehen ist. Die Auswertung der Temperatursignale kann beispielsweise durch eine Gradientenauswertung erfolgen. Ist ein Temperatursensor zum Beispiel in den Nähe des Ausgangs der Zusatzheizung installiert, so kann es bei einer Überdrückung zu einem schlagartigen Temperaturabfall im Bereich dieses Temperatursensors kommen. Da ein solcher Temperaturabfall bei einer gleichbleibenden oder steigenden Heizleistung ohne das Vorliegen einer Überdrückung nicht vorliegen könnte, kann aus dem Temperaturabfall auf eine Überdrückung geschlossen werden. Ebenfalls ist es möglich, mehrere Temperatursensoren im Bereich der Zusatzheizung zu installieren und aus dem räumlichen Temperaturverlauf auf eine eventuell vorliegende Überdrückung zu schließen.

Besonders bevorzugt ist es, dass das Zusatzgebläse regelbar ist. Eine solche Regelung kann stufenlos oder auch in Stufen erfolgen, wobei diese Regelaufgaben vorzugsweise vom Steuergerät der Zusatzheizung übernommen werden. Ebenfalls ist es möglich, eine in Stufen erfolgende beziehungsweise eine stufenlose Steuerung vorzusehen. Bei einer anderen Betriebsart kann das System so ausgelegt sein, dass das Zusatzgebläse nur ein- beziehungsweise ausgeschaltet wird. Hierzu kann beispielsweise ein Relais verwendet werden.

Es kann ebenfalls vorteilhaft sein, dass das Zusatzgebläse direkt in Abhängigkeit eines Ausgangssignals eines Temperatursensors betätigbar ist. Ein solcher Temperatursensor kann beispielsweise ein Bimetallelement sein, so dass eine Ansteuerung des Zusatzgebläses unabhängig von einem Steuergerät erfolgen kann.

Es kann weiterhin vorgesehen sein, dass durch mindestens ein Zusatzgebläse eine Strömung in die Richtung von der zweiten Heizung zu der ersten Heizung erzeugt wird. Auf diese Weise werden die im Zusammenhang mit dem Heizsystem erläuterten Eigenschaften und Vorzüge der Erfindung auch im Rahmen eines Verfahrens realisiert. Dies gilt ebenso für die nachfolgend genannten Ausführungsformen des Verfahrens.

Die Erfindung entfaltet ihre Vorteile besonders dadurch, dass die erste Heizung eine Fahrzeugheizung ist und dass die zweiten Heizung eine Zusatzheizung ist.

Vorzugsweise ist mindestens eine Mischkammer vorgesehen, in die aus der mindestens einen ersten Heizung und aus der mindestens einen zweiten Heizung ausgeströmte Luft eintreten kann.

Von besonderem Vorteil ist es, dass das Zusatzgebläse in Abhängigkeit eines Ausgangssignals eines Steuergerätes betätigt wird.

Im vorgenannten Zusammenhang ist es von besonderem Vorteil, dass Druckzustände in dem Heizsystem von mindestens einem Drucksensor erfasst werden und dass ein druckabhängiges Eingangssignal für ein Steuergerät erzeugt wird.

Im gleichen Sinne ist es zu bevorzugen, dass Temperaturzustände in dem Heizsystem von mindestens einem Temperatursensor erfasst werden und dass ein temperaturabhängiges Eingangssignal für ein Steuergerät erzeugt wird.

Weiterhin kann es nützlich sein, dass das Zusatzgebläse geregelt wird.

In einer anderen nützlichen Ausführungsform des erfindungsgemäßen Verfahrens ist vorgesehen, dass das Zusatzgebläse direkt in Abhängigkeit eines Ausgangssignals eines Temperatursensors betätigt wird.

Es kann nützlich sein, dass das Zusatzgebläse eingeschaltet beziehungsweise ausgeschaltet wird, wenn die zweite Heizung eingeschaltet beziehungsweise ausgeschaltet wird. Das Zusatzgebläse wird also nur unterstützend für das Gebläse der zweiten Heizung eingesetzt und insbesondere nur während des Heizbetriebs der zweiten Heizung.

Es kann aber auch nützlich sein, dass das Zusatzgebläse eingeschaltet beziehungsweise ausgeschaltet wird, wenn die erste Heizung eingeschaltet wird. Da die Gefahr einer Überdrückung des Heizsystems während der Einschaltphase des ersten Heizsystems besteht, kann eine solche Betriebsart des Zusatzgebläses sinnvoll sein.

In einer weiteren Variante wird das Zusatzgebläse eingeschaltet, wenn eine Überdrückung des Heizsystems erkannt wird. Auf diese Weise wird die Betriebszeit des Zusatzgebläses minimiert, da es nur dann eingeschaltet ist, wenn der Zustand vorliegt, für den das Heizsystem mit Zusatzgebläse konzipiert ist.

Somit können eine Überdrückung und die damit verbundenen Probleme im Bereich einer Luftzusatzheizung durch das Bereitstellen eines Zusatzgebläses überwunden werden. Auf diese Weise kann sichergestellt werden, dass der Volumenstrom und die Drucksteifigkeit in die Richtung von der zweiten Heizung zu der ersten Heizung immer ausreichend sind, um den Gegendruck zu überwinden, der von der Fahrzeugheizung erzeugt wird. Das Erkennen einer Strömungsumkehr innerhalb des Luftheizgerätes kann erfindungsgemäß mit Hilfe einer Auswertung eines zeitlichen Temperaturgradienten erfolgen.

Die Erfindung wird nun mit Bezug auf die begleitenden Zeichnungen anhand bevorzugter Ausführungsformen beispielhaft erläutert.

### Dabei zeigt:

- Figur 1: eine schematische Darstellung eines Heizsystems mit einer ersten Ausführungsform einer Umschaltklappe;
- Figur 2: eine schematische Darstellung eines Teils eines Heizsystems mit einer zweiten Ausführungsform einer Umschaltklappe;
- Figur 3: eine perspektivische Darstellung der zweiten Ausführungsform einer Umschaltklappe;
- Figur 4: eine schematische Darstellung eines Teils eines Heizsystems mit einer zweiten Ausführungsform einer Umschaltklappe während eines ersten Strömungszustandes;
- Figur 5: eine schematische Darstellung eines Teils eines Heizsystems mit einer zweiten Ausführungsform einer Umschaltklappe während eines zweiten Strömungszustandes;
- Figur 6: eine schematische Darstellung eines Heizsystems mit einem Zusatzgebläse;
- Figur 7: ein Diagramm, bei dem Druckdifferenzen von Drücken vor und hinter einer Luftzusatzheizung beziehungsweise einer Fahrzeugheizung gegen den Volumenstrom aufgetragen sind;
- Figur 8: eine schematische Darstellung eines Heizsystems mit einer Rückschlagklappe;
- Figur 9: drei perspektivische Darstellungen einer Rückschlagklappe in verschiedenen Perspektiven beziehungsweise Montagezuständen;
- Figur 10: eine schematische Darstellung einer Luftzusatzheizung mit einem Druckdifferenzsensor;
- Figur 11: eine schematische Darstellung einer Luftzusatzheizung mit Temperatursensoren;
- Figur 12: eine schematische Darstellung eines erfindungsgemäßen Luftheizgerätes;
- Figur 13: ein Flussdiagramm zur Erläuterung eines erfindungsgemäßen Verfahrens zum Erkennen rückströmender Heizluft durch ein Luftheizgerät;
- Figur 14: eine schematische Darstellung eines Heizsystems des Standes der Technik mit einem unkritischen Strömungszustand; und
- Figur 15: eine schematische Darstellung eines Heizsystems des Standes der Technik mit einem kritischen Strömungszustand.

Bei der nachfolgenden Beschreibung der Zeichnungsfiguren bezeichnen gleiche Bezugszeichen gleiche oder vergleichbare Elemente.

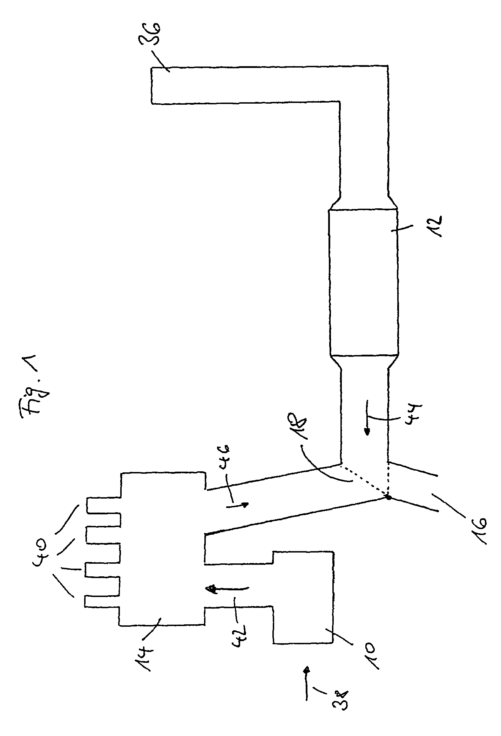

Figur 1 zeigt eine schematische Darstellung eines Heizsystems mit einer ersten Ausführungsform einer Umschaltklappe 18. Eine Fahrzeugheizung 10 mit einem Lufteintritt 38, der nicht näher dargestellt ist, steht mit einer Mischkammer 14 in Verbindung. Weiterhin ist eine Zusatzheizung 12 vorgesehen, die einen Lufteintritt 36 aufweist. Auch die Zusatzheizung 12 kann mit der Mischkammer 14 verbunden sein. Die Mischkammer 14 weist mehrere Luftkanäle 40 für den Austritt von Luft auf. Im Allgemeinen besteht in der Mischkammer 14 die Möglichkeit, den dort eintretenden Volumenstrom über Klappen in die unterschiedlichen Luftkanäle 40 umzuleiten oder Luftkanäle 40 abzuschließen. Auf diese Weise wird dem Benutzer die Möglichkeit gegeben, umfangreiche Einstellungen zur Klimatisierung des Innenraums des Kraftfahrzeugs vorzunehmen.

Weiterhin ist in dem Verbindungsbereich zwischen Zusatzheizung 12 und Mischkammer 14, der auch der Verbindungsbereich zwischen Zusatzheizung 12 und Fahrzeugheizung 10 ist, eine Abluftöffnung 16 vorgesehen. Im Bereich dieser Abluftöffnung 16 ist eine Umschaltklappe 18 gelenkig angeordnet.

Die Umschaltklappe 18 ist in zwei Zuständen gezeigt und daher mit unterbrochenen Linien dargestellt. Im ersten Schaltzustand verschließt die Umschaltklappe 18 die Abluftöffnung 16, und es besteht eine Verbindung zwischen der Zusatzheizung 12 und der Mischkammer 14 beziehungsweise der Fahrzeugheizung 10. In einem zweiten Schaltzustand verschließt die Umschaltklappe 18 diese Verbindung zwischen Zusatzheizung 12 und Mischkammer 14; die Abluftöffnung 16 wird hingegeben freigegeben. Das Heizsystem mit dem ersten Zustand der Umschaltklappe 16 entspricht also strömungstechnisch vom Prinzip her dem Heizsystem des Standes der Technik, das anhand der Figuren 14 und 15 erläutert wurde. Dieser erste Zustand der Umschaltklappe kann also dann eingenommen werden, wenn ein zulässiger Strömungszustand vorliegt, wie er anhand von Figur 14 erläutert wurde, insbesondere also dann, wenn keine Überdrückung durch einen Gegendruck 46 vorliegt, der letztlich aus der ausströmenden Luft 42 aus der Fahrzeugheizung 10 resultiert. In dem Fall hat die Strömung 44 aus der Zusatzheizung 12 eine ausreichende Drucksteifigkeit, um in die Mischkammer 14 zu gelangen. Erhöht sich der Gegendruck 46 jedoch, so dass es letztlich zu einer Strömungsumkehr der Strömung 44 aus der Zusatzheizung 12 kommen könnte, so verschließt die Umschaltklappe 18 die Verbindung zwischen der Zusatzheizung 12 und der Mischkammer 14 beziehungsweise der Fahrzeugheizung 10 und gibt die Abluftöffnung 16 frei. Die Strömung 44 aus der Zusatzheizung 12 kann dann durch die Abluftöffnung 16 austreten. Somit kann die mitunter stark aufgeheizte Zusatzheizung 12 abkühlen.

Das Umschalten der Umschaltklappe 18 kann beispielsweise durch einen (nicht dargestellten) elektrischen Stellmotor erfolgen, der von einem Ausgangssignal eines (nicht dargestellten) Steuergerätes aktiviert wird. Dieses Steuergerät kann eine Vielzahl von Eingangssignalen verarbeiten, beispielsweise Druck beziehungsweise Temperatur an verschiedenen Positionen des Heizsystems. Wenn nach einer gewissen Zeit des Abströmens der Strömung 44 aus der Zusatzheizung 12 durch die Abluftöffnung 16 davon auszugehen ist, dass die Zusatzheizung 12 ausreichend abgekühlt ist, kann die Umschaltklappe 18 wieder in den ersten Zustand überführt werden, da dann mit einer gewissen Wahrscheinlichkeit die Drucksteifigkeit der Strömung 44 wieder ausreicht, so dass sie den Gegendruck 46 überwinden kann.

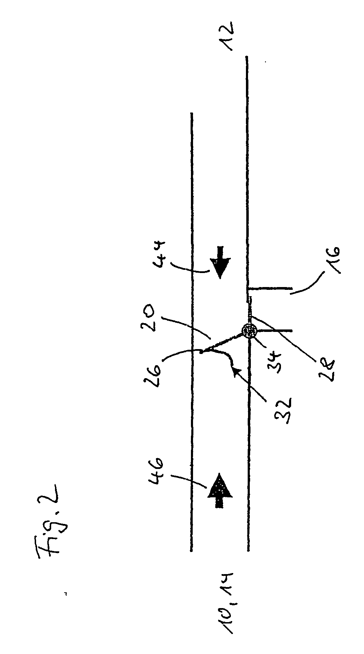

Figur 2 zeigt eine schematische Darstellung eines Teils eines Heizsystems mit einer zweiten Ausführungsform einer Umschaltklappe 20. Die strömungsmechanisch betätigte Umschaltklappe 20 ist im vorliegenden Beispiel in der Verbindungsleitung zwischen der Fahrzeugheizung 10 beziehungsweise der Mischkammer 14 und der Zusatzheizung 12 angeordnet. Sie befindet sich daher im Bereich der Strömung 44, die von der Zusatzheizung erzeugt wird, und des Gegendruckes 46, der von dem Gebläse der Fahrzeugheizung 10 erzeugt wird. Die Umschaltklappe 20 hat einen ersten Bereich 26, der in den Strömungsbereich hineinragt. Ein zweiter Bereich 28 dient dem Verschließen beziehungsweise dem Freigeben einer Abluftöffnung 16. Die Umschaltklappe 20 ist weiterhin mit einer Abdeckung 32 an ihrem ersten Bereich 26 ausgestattet, die vorliegend als Elastomerlappen realisiert ist. Die Umschaltklappe 20 ist mittels einer Achse 34 gelenkig gelagert.

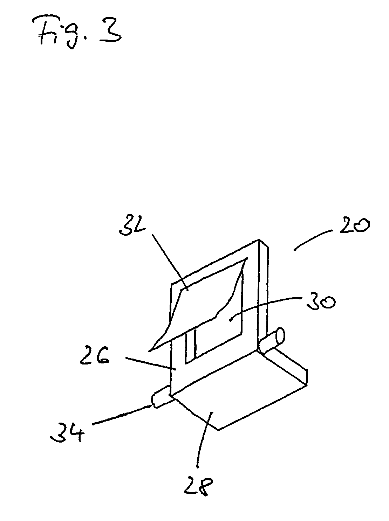

Figur 3 zeigt eine perspektivische Darstellung der zweiten Ausführungsform einer Umschaltklappe 20. Eine mögliche Gestaltung der Umschaltklappe 20 ist zu erkennen. Dabei bilden der erste Bereich 26 und der zweite Bereich 28 im Querschnitt eine L-förmige Struktur, wobei der von dem ersten Bereich 26 und dem zweiten Bereich 28 eingeschlossene Winkel größer ist als 90°. Der erste Bereich 26 hat weiterhin eine Öffnung 30. Diese Öffnung kann von der Abdeckung 32 freigegeben beziehungsweise verschlossen werden. Aufgrund der Kräfte, die strömungsmechanisch auf die Umschaltklappe 20 wirken, kann die Umschaltklappe 20 durch gelenkige Lagerung um die Achse 34 geschwenkt werden.

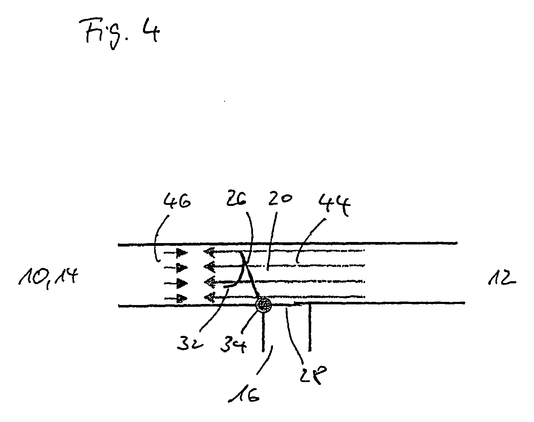

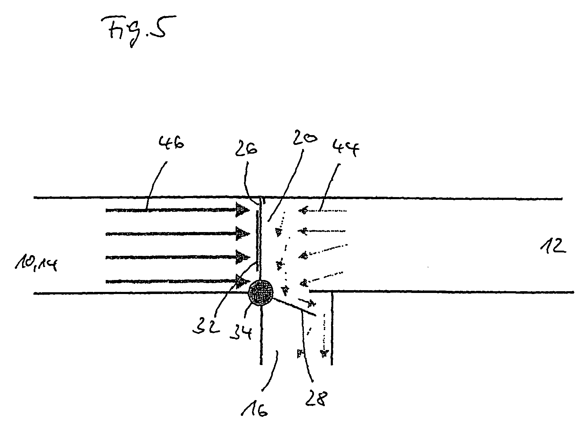

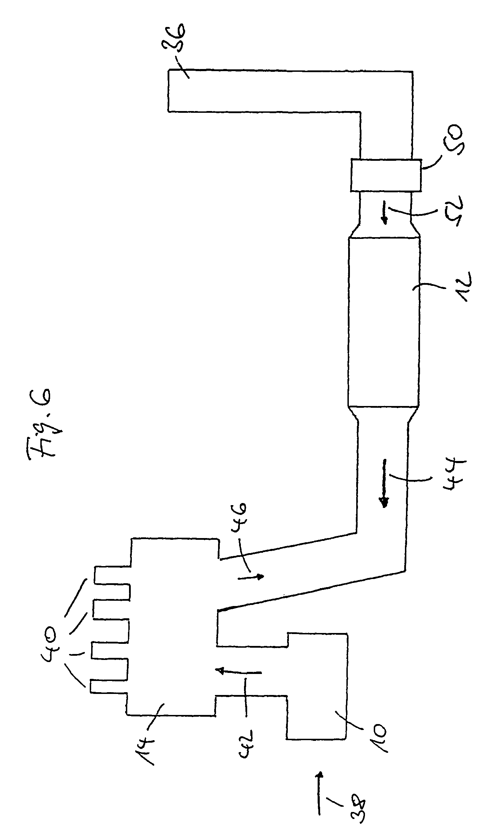

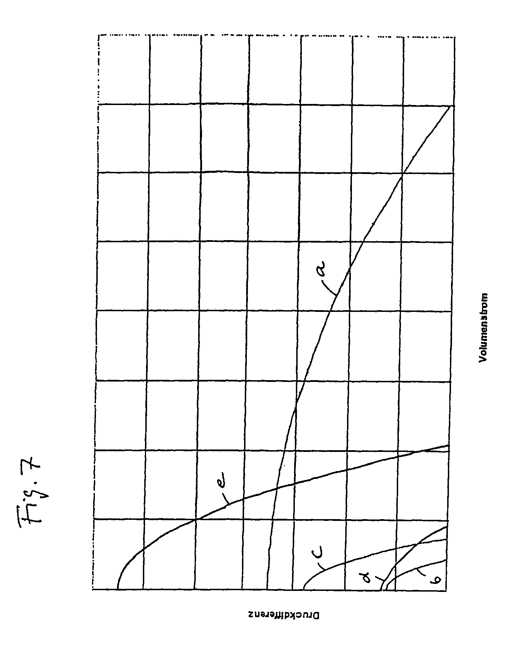

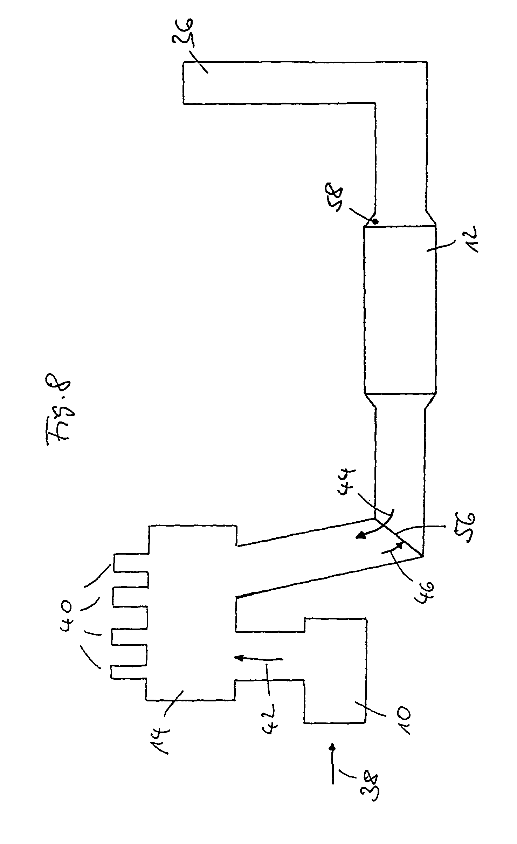

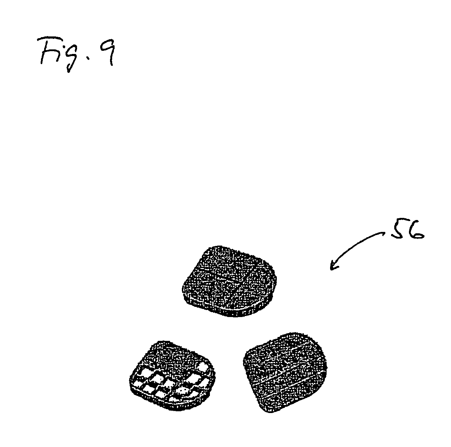

Figur 4 zeigt eine schematische Darstellung eines Teils eines Heizsystems mit einer zweiten Ausführungsform einer Umschaltklappe 20 während eines ersten Strömungszustandes. In dem hier dargestellten Strömungszustand ist der Gegendruck 46 der Fahrzeugheizung 10 gering. Somit kann die Zusatzheizung 12 eine Strömung 44 in die richtige Richtung ausbilden. Die Umschaltklappe 20 wird hierdurch in Richtung der Fahrzeugheizung 10 beziehungsweise der Mischkammer 14 gedrückt, und die als Rückschlagklappe wirkende Abdeckung 32 öffnet sich. Der zweite Bereich 28 der Umschaltklappe 20 verschließt die Abluftöffnung 16. Damit es nicht zu einem unbeabsichtigten Öffnen der Abluftöffnung 16 kommt, obwohl an sich ein korrekter Betrieb erfolgen kann, sind die an der Strömungsmechanik beteiligten Flächen, das heißt der erste Bereich 26, der zweite Bereich 28 und die Abdeckung 32 entsprechend aufeinander abgestimmt.

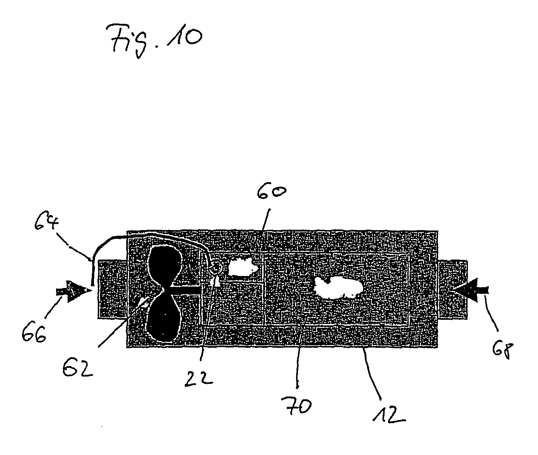

Figur 5 zeigt eine schematische Darstellung eines Teils eines Heizsystems mit einer zweiten Ausführungsform einer Umschaltklappe 20 während eines zweiten Strömungszustandes. Dieser Strömungszustand wird erreicht, wenn der Gegendruck 46, der aus der Richtung der Fahrzeugheizung 10 beziehungsweise der Mischkammer 14 kommt, ansteigt. Ist dies der Fall, so schließt sich die Rückschlagklappe 20 in zunehmendem Maße. Wird der Gegendruck 46 so stark, dass die Strömung 44 von der Zusatzheizung 12 nicht mehr in die richtige Richtung erfolgen kann, so wird die Rückschlagklappe 20 komplett geschlossen. Der sich aufbauende Staudruck zwingt die Umschaltklappe 20 zum Umkippen. Ebenfalls verschließt die als Rückschlagklappe wirkende Abdeckung 32 die Öffnung (30, Figur 3) des ersten Bereiches 26 der Umschaltklappe 20. Verringert sich der Druck 46 der Fahrzeugheizung 10, so wird durch die Strömung 44 beziehungsweise durch den hierdurch entstehenden Überdruck an der Rückschlagklappe 20 diese wieder zum Umkippen in die andere Richtung gezwungen.

Die Figuren 1, 2, 4 und 5 zeigen die Umschaltklappen 18, 20 stets im Verbindungsbereich zwischen der Mischkammer 14 und der Zusatzheizung 12. Dies ist eine bevorzugte Position der Umschaltklappen 18, 20. Es sind allerdings auch andere Positionierungen möglich, etwa direkt am Ausgang der Zusatzheizung 12 oder im Bereich von Mischkammer 14 beziehungsweise Fahrzeugheizung 10.

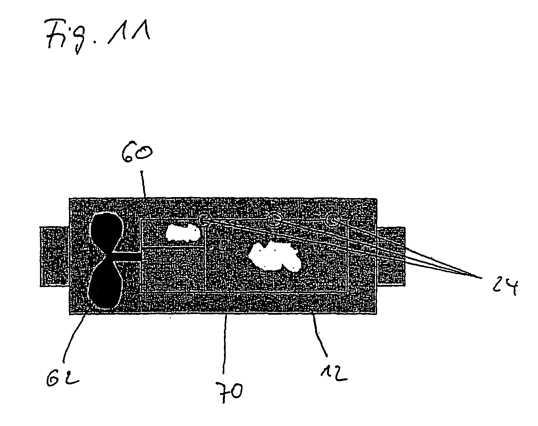

Figur 6 zeigt eine schematische Darstellung eines Heizsystems mit einem Zusatzgebläse. Das Heizsystem entspricht in weiten Teilen dem Heizsystem gemäß Figur 1 beziehungsweise dem Heizsystem des Standes der Technik gemäß den Figuren 14 und 15. Zusätzlich ist in Strömungsrichtung vor der Zusatzheizung ein Zusatzgebläse 50 angeordnet, das eine zusätzliche Strömung 52 erzeugt. Auf diese Weise ist es möglich, den Volumenstrom beziehungsweise den Druck der Zusatzheizung 12 so weit zu erhöhen, dass die Zusatzheizung 12 unter beliebigen Betriebsbedingungen nicht überdrückt wird. Ferner ist keine Verdämmung erforderlich, um einen stabilen und schonenden Heizgerätebetrieb zu gewährleisten. Damit kann auch bei niedrigen Drehzahlen der Zusatzheizung 12 eine Überdrückung verhindert werden. Im Zusatzheizgerät 12 herrschen durchschnittlich geringere Temperaturen, so dass die Bauteile weniger belastet werden. Es kann ein gleichmäßigerer Betrieb der Zusatzheizung 12 stattfinden, der insbesondere weniger Regelzyklen erfordert, wodurch der Brenner in der Zusatzheizung 12 weniger belastet wird. Der Wärmeenergiebeitrag der Zusatzheizung 12 kann erhöht werden, da die Maximalheizleistung größer wird. Weiterhin kann ein sauberer Start- und Ausbrennzyklus gewährleistet werden. Da keine Verdämmung und damit in Verbindung keine Abluftöffnung vorgesehen sein muss, geht weniger Wärmeenergie verloren.

Bei dem Heizsystem gemäß Figur 6 ist es grundsätzlich möglich, das Zusatzgebläse 50 nur mit einer Einschalt- beziehungsweise Ausschaltfunktion zu versehen. Dies ermöglicht eine besonders einfache Ansteuerung, beispielsweise über ein Relais. Es ist aber auch möglich, das Zusatzgebläse 50 stufenlos zu regeln oder zu steuern. Dies kann direkt vom Heizungssteuergerät vorgenommen werden. Auch im Fall einer Einschalt-Ausschalt-Steuerung, das heißt ohne Drehzahländerung, kann das Heizungssteuergerät ein veranlassendes Signal generieren. Ebenfalls ist es möglich, dieses Signal über einen zusätzlichen Temperatursensor, beispielsweise ein Bimetallelement, unabhängig vom Heizungssteuergerät vorzunehmen.

Eingriffe in den Betrieb des Zusatzgebläses 50 können unter unterschiedlichen Voraussetzungen erfolgen. Das Zusatzgebläse kann beispielsweise immer eingeschaltet werden, wenn das Heizgerät einschaltet. In einem anderen Fall kann das Einschalten des Zusatzgebläses 50 vom Einschalten der Fahrzeugheizung 10 abhängig gemacht werden. Ebenfalls kann vorgesehen sein, dass nur im Falle einer Überdrückung oder Verdämmung das Zusatzgebläse zugeschaltet wird.

In Figur 6 ist die Position des Zusatzgebläses 50 vor der Zusatzheizung 12 dargestellt. Diese Position ist zu bevorzugen, da auf diese Weise das Zusatzgebläse 50 keiner Wärmebelastung ausgesetzt wird. Ebenfalls ist es denkbar, das Zusatzgebläse 50 in den Bereich des Lufteintritts 36 zu verlegen. Wählt man ein Zusatzgebläse 50, welches einer gewissen Wärmebelastung standhält, so ist es auch möglich, das Zusatzgebläse 50 hinter der Zusatzheizung 12, das heißt zwischen Zusatzheizung 12 und Mischkammer 14, anzuordnen.

Figur 7 zeigt ein Diagramm, bei dem Druckdifferenzen von Drücken vor und hinter einer Luftzusatzheizung beziehungsweise einer Fahrzeugheizung gegen den Volumenstrom aufgetragen sind. Die dargestellten Gebläsekennlinien sind teilweise nur qualitativ zu betrachten. Kurve a zeigt die Kennlinie eines Gebläses einer Fahrzeugheizung auf hoher Stufe. Kurve b zeigt die Kennlinie eines vergleichsweise kleinen Gebläses einer Zusatzheizung bei relativ geringer Drehzahl; Kurve c zeigt die Kennlinie desselben Gebläses bei erhöhter Drehzahl. Kurve d zeigt die Kennlinie eines größeren Gebläses bei relativ geringer Drehzahl; Kurve e zeigt die Kennlinie desselben Gebläses bei erhöhter Drehzahl.

Die Kennlinien b, c, d von Zusatzheizungsgebläsen, die die Kennlinie a des Fahrzeugheizungsgebläses nicht schneiden, zeigen an, dass die Gebläse der Zusatzheizungen bei den jeweiligen Drehzahlen den Gegendruck der Fahrzeugheizung nicht überwinden können. Dies führt zu einer Überdrückung des Heizgerätes.

Die Kennlinie e des Zusatzheizungsgebläses schneidet die Kennlinie a des Fahrzeugheizungsgebläses. Dies bedeutet, dass bei der angegebenen Drehzahl das Zusatzheizungsgebläse einen höheren Druck aufbringen kann als das Fahrzeugheizungsgebläse und dabei weiterhin Heizluft in die richtige Richtung fördern kann. Es kommt also nicht zu einer Überdrückung des Heizsystems. Das kleinere Zusatzheizungsgebläse kann gemäß den Kennlinien b und c weder bei niedriger noch bei hoher Drehzahl dem Fahrzeugheizungsgebläse entgegenwirken. Es erfolgt unabhängig von der Drehzahl eine Überdrückung des Heizsystems. Bei dem größeren Gebläse findet eine solche Überdrückung nur bei der geringen Drehzahl gemäß Kennlinie d statt.

Allerdings ist zu beachten, dass die angegebenen Kennlinien Kaltkennlinien sind, so dass auch beim Einsatz eines großen Zusatzheizungsgebläses der Einsatz eines Zusatzgebläses sinnvoll ist. Dies hat den Grund, dass im Heizbetrieb der Aufbau der angegebenen hohen Drücke zwischen 6 und 7 Millibar nicht möglich ist, da mit steigendem Gegendruck auch der Volumenstrom abnimmt und somit die Heizlufttemperatur ansteigt. Bei maximalen Druck kann somit die Wärme des Wärmeübertragers nicht mehr abgeführt werden, es kommt zur Überhitzung und damit zur Überhitzungsabschaltung. Außerdem ist zu beachten, dass ein Abschalten oder ein Herunterregeln des Zusatzheizgerätes mitunter auch schon bei geringeren Gegendrücken erfolgt, was mit einer Absenkung der Drehzahl des Zusatzheizungsgebläses einhergeht. Auch dies birgt die Gefahr einer Überdrückung des Heizsystems. Auch im Startbetrieb kann das Gebläse einer Zusatzheizung im Allgemeinen nicht mit Volllast betrieben werden, so dass im Hinblick darauf ebenfalls ein Zusatzgebläse nützlich ist, um eine Überdrückung des Heizsystems zu vermeiden.

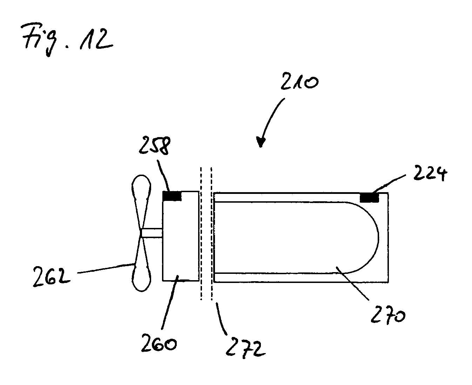

Figur 8 zeigt eine schematische Darstellung eines Heizsystems mit einer Rückschlagklappe. Das dargestellte Heizsystem entspricht in weiten Teilen dem Heizsystem des Standes der Technik gemäß den Figuren 14 und 15 beziehungsweise den Heizsystemen, die im Zusammenhang mit den Figuren 1 bis 6 erläutert wurden. In der dargestellten Ausführungsform sind jedoch kein Zusatzgebläse (50, Figur 6) und auch keine Abluftöffnung (16, Figur 1) sowie keine Umschaltklappe (18, Figur 1) vorgesehen. Als zusätzliche Komponenten sind eine Rückschlagklappe 56 zwischen der Zusatzheizung 12 und der Mischkammer 14 beziehungsweise der Fahrzeugheizung 10 sowie ein zusätzlicher Temperatursensor 58 am Eingangsbereich der Zusatzheizung 12 vorgesehen. Der zusätzliche Temperatursensor 58 kann direkt am Steuergerät der Luftzusatzheizung 12 angebracht werden. Vorzugsweise sollte der Sensor frei im Luftstrom liegen, um so eine möglichst geringe Trägheit zu realisieren. Die Anschlüsse und ein eventuell vorgesehener Stecker am Temperatursensor sollten jedoch wasserdicht ausgeführt sein.

Bei dem in Figur 8 dargestellten Heizsystem wird der Überdrückung des Heizsystems auf die folgende Weise entgegengewirkt. Die Rückschlagklappe 56 lässt eine Strömung von der Zusatzheizung 12 in die Mischkammer 14 zu, wenn die Druckverhältnisse einen normalen Betrieb erlauben. Kommt es zu einer Überdrückung des Heizsystems durch erhöhten Gegendruck 46, so erfolgt durch die Rückschlagklappe 56 eine totale Verdämmung der Zusatzheizung 12. Ein in der Zusatzheizung 12 ohnehin in der Regel vorgesehener Temperatursensor (nicht dargestellt) erkennt diese totale Verdämmung aufgrund des erfolgenden Temperaturanstiegs und schaltet die Zusatzheizung 12 ab. Der zusätzliche Temperaturfühler 58 der Zusatzheizung 12 dient als redundantes Sicherheitselement. Ist nämlich die Rückschlagklappe 56 defekt und kommt es somit zu einer Überdrückung des Heizsystems, so kann mitunter ein beispielsweise im Ausgangsbereich der Zusatzheizung 12 angeordneter Temperaturfühler keinen Temperaturanstieg feststellen. Im Bereich des Temperaturfühlers 58 am Eingangsbereich der Zusatzheizung 12 wird jedoch die rückströmende Luft durch die Zusatzheizung 12 ausreichend erhitzt sein, so dass der Temperaturanstieg als zuverlässiges Indiz für eine Überdrückung verwendet werden kann. Abhängig von den Zuständen sonstiger Fahrzeugkomponenten können im Steuergerät der Zusatzheizung 12 unterschiedliche Programmabläufe abgearbeitet werden. Wenn beispielsweise die Zündung des Fahrzeugs beziehungsweise die Fahrzeugheizung 10 eingeschaltet sind, so können bei einem Abschalten des Brenners die Drehzahlen der Zusatzheizung 12 so weit erhöht werden, dass in jedem Fall eine ausreichende Luftmenge zum Abkühlen der Bauteile in die vorgesehene Richtung zur Verfügung gestellt werden kann. Mit anderen Worten: eine Regelpausendrehzahl der Zusatzheizung 12 wird von einem an sich geringen Wert hochgesetzt, vorzugsweise auf 100 %. Sind hingegen die Zündung des Kraftfahrzeugs beziehungsweise die Fahrzeugheizung 10 ausgeschaltet, so wird auf die besonders starke Drehzahlerhöhung der Zusatzheizung 12 verzichtet, was mit einer geringeren Geräuschentwicklung verbunden ist. Mit anderen Worten: es findet eine "normale" Regelpause mit einer Regelpausendrehzahl von zirka 15 bis 30 % der Volllastdrehzahl statt. Das Überführen des Zusatzheizgerätes 12 in die Regelpause kann anstelle einer ebenfalls einsetzbaren Störverriegelung stattfinden. Dabei ist bevorzugt, dass das Heizgerät 12 nur eine begrenzte Anzahl aufeinanderfolgender Übergänge in eine Regelpause durchführen kann. Danach wird das Heizgerät in einen Zustand mit Störverriegelung überführt.

Bei dem System gemäß Figur 8 kann zusätzlich vorgesehen sein, das an der Ausblasseite der Luftzusatzheizung 12 eine Auskühlöffnung vorgesehen ist, die vorzugsweise mit einem sogenannten Entenschnabel verschlossen ist. Dies ermöglicht, dass bei einer totalen Verdämmung des Zusatzheizgerätes 12 und dem daraus resultierenden hohen Druck im System zumindest ein kleiner Lufttransport stattfinden kann und die erhitzte Luft von den empfindlichen Bauteilen abgehalten wird. Bringt man gleichzeitig die Öffnung als Bohrung an der richtigen Stelle an, so kann sie als Ablauf für Kondenswasser verwendet werden.

Figur 9 zeigt drei perspektivische Darstellungen einer Rückschlagklappe in verschiedenen Perspektiven beziehungsweise Montagezuständen. Es sind drei Beispiele von Rückschlagklappen 56 gezeigt, wobei diesen gemeinsam ist, dass ein gitterförmiger Träger mit einem oder mehreren darauf angeordneten elastischen Lappen vorgesehen ist. Die Lappen können den gitterförmigen Träger vollständig überdecken.

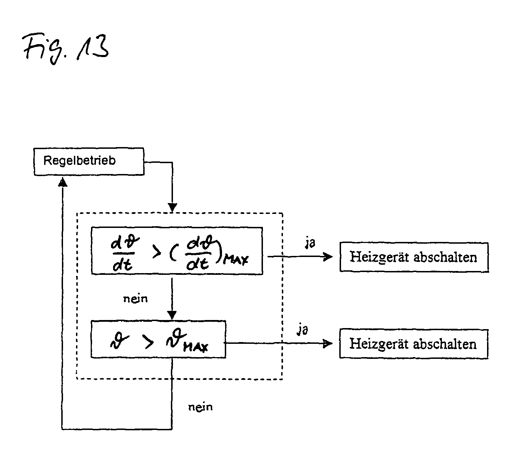

Figur 10 zeigt eine schematische Darstellung einer Luftzusatzheizung 12 mit einem Druckdifferenzsensor 22. Es sind weiterhin ein Steuergerät 60, ein Gebläse 62 und ein Wärmeübertrager 70 dargestellt. Auf dem Steuergerät 60 ist ein Druckdifferenzsensor 22 angebracht, der über eine Druckleitung 64 mit dem Bereich vor der Luftzusatzheizung 12, das heißt dem Zuströmbereich, verbunden ist. Der Druckdifferenzsensor 22 ist somit in der Lage, eine Differenz eines Drucks 66 vor und eines Drucks 68 hinter der Luftzusatzheizung 12 zu messen. Dieses Signal kann dann direkt dem Steuergerät 60 eingegeben werden. Wird eine zu große Druckdifferenz festgestellt, so wird je nach Ausführungsform des restlichen Heizsystems auf eine Überdrückung beziehungsweise eine Verdämmung geschlossen. Die Zusatzheizung 12 wird dann ausgeschaltet beziehungsweise in einen anderen Betriebsmodus überführt.

Weitere Möglichkeiten zum Erkennen einer Überdrückung bestehen darin, einen Windrichtungssensor beziehungsweise einen Strömungssensor zu verwenden. Dieser ist in der Lage, eine Strömungsrichtung zu erkennen, wobei Verfahren verwendet werden können, die auf einem Flügelrad, einer kaloriemetrischen Bestimmung über einen Heizdraht oder auf Ultraschall beruhen. Weiterhin kann die Drehzahländerung eines Gebläses als Indiz für eine Überdrückung herangezogen werden, da die Drehzahl ansteigt, sobald das Heizgerät verdämmt beziehungsweise überdrückt wird. Dieser Anstieg der Gebläsedrehzahl kann über das Heizungssteuergerät 60 erkannt und ausgewertet werden.

Figur 11 zeigt eine schematische Darstellung einer Luftzusatzheizung 12 mit mehreren Temperatursensoren 24, wobei ansonsten ein ähnlicher Aufbau wie in Figur 10 erkannt werden kann. Diese Temperatursensoren 24 sind an unterschiedlichen Positionen der Luftzusatzheizung 12 angeordnet. Die Informationen der unterschiedlichen Temperaturfühler 24 können in unterschiedlicher Weise genutzt werden. Es gibt beispielsweise Betriebsbedingungen, bei denen im Falle einer Überdrückung die Temperaturen des Temperatursensors 24 im Bereich des Steuergerätes 60 und des mittleren Temperatursensors 24 ansteigen, während die Temperatur des Temperatursensors 24 im Bereich des Ausgangs der Zusatzheizung 12 abfällt. Dieser Zustand kann beispielsweise als Indiz für eine Überdrückung herangezogen werden. Ebenfalls kann die zeitliche Änderung der Temperatur an den Temperaturfühlern im Rahmen einer Gradientenauswertung genutzt werden. Dabei kann eine positive Gradientenauswertung in Frage kommen, nämlich im Hinblick auf solche Temperatursensoren 24 bei denen im Falle einer Überdrückung eine Temperaturerhöhung zu erwarten ist. Bei anderen Temperatursensoren 24, bei denen eine Erniedrigung der Temperatur im Falle einer Überdrückung zu erwarten ist, kann eine negative Gradientenauswertung verwendet werden. Es ist zu berücksichtigen, dass bei besonderen Betriebszuständen des Heizgerätes, beispielsweise am Anfang des Betriebs im ausgekühlten Zustand, gewisse Nebenbedingungen vorliegen. Beispielsweise kann beim Betriebsbeginn einem durchgekühlten Heizgerät schlagartig warme Luft aus dem Innenraum zugeführt werden, wodurch ein hoher Temperaturgradient ermittelt wird. Es wäre fehlerhaft, diesen als Indiz für eine Überdrückung zu verwenden. Ebenfalls sollten erste Anzeichen einer Temperaturerhöhung am Überdrückungssensor nicht unmittelbar in Maßnahmen gegen eine Überdrückung umgesetzt werden. Vielmehr sollten wiederholte Messungen der Messwerte herangezogen werden beziehungsweise unterschiedliche Messwerte, die an sich redundant sind, als Kriterium für eine Gegenmaßnahme gegen eine Überdrückung verwendet werden.

Je nach dem eingesetzten System zur Vermeidung einer Überdrückung können äußere Einflussfaktoren eine große Rolle spielen. Insbesondere bei einer Temperaturauswertung kann es sinnvoll sein, die Außentemperatur, die Ansaugtemperatur, den Einschaltzustand der Fahrzeugheizung, den Verdämmungsgrad der Ansaugheizung und/oder den Vorzustand der Fahrzeugheizung bei der Erwägung von Maßnahmen einzubeziehen. Aus beliebigen Kombinationen dieser Einflussfaktoren resultieren dann unterschiedliche Betriebsarten des Systems.

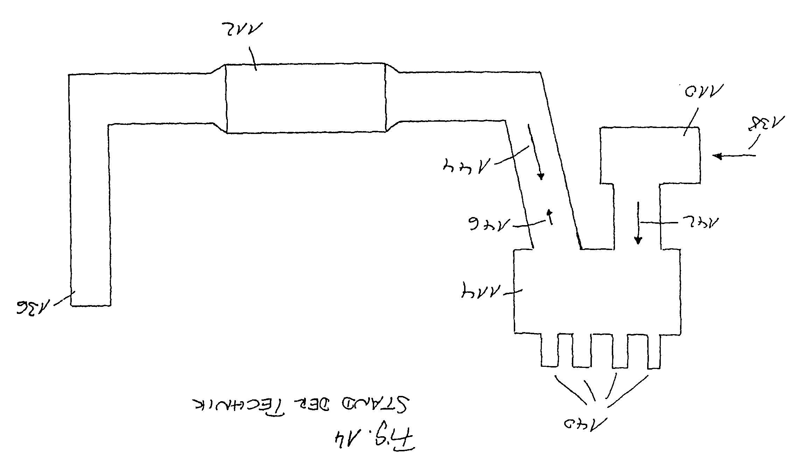

Figur 12 zeigt eine schematische Darstellung eines erfindungsgemäßen Luftheizgerätes 210. Das Luftheizgerät 210 umfasst einen Wärmeübertrager 270 und einen im Bereich des Wärmeübertragers 270 angeordneten Temperatursensor 224. Dieser Temperatursensor 224 wird im Rahmen eines herkömmlichen Überhitzungsschutzes des Luftheizgerätes 210 eingesetzt. Innerhalb des Wärmeübertragers 270 ist ein (nicht dargestellter) Brenner vorgesehen. Weiterhin umfasst das Luftheizgerät 210 ein Steuergerät 260 sowie einen Heizluftläufer beziehungsweise ein Gebläse 262 zum Einbringen von zu erwärmender Luft in das Luftheizgerät 210. Im Lufteintrittsbereich, das heißt insbesondere im Bereich des Steuergerätes 260, ist ein weiterer Temperatursensor 258 vorgesehen, der im Allgemeinen im Rahmen einer Temperaturermittlung der in das Luftheizgerät 210 eintretenden Luft dient. Auf der Grundlage dieser Temperaturermittlung der eintretenden Luft kann der Betrieb des Luftheizgerätes 210 optimiert werden.

Im Rahmen der vorliegenden Erfindung wird der Situation Rechnung getragen, in der eine Rückströmung von Heizluft stattfindet. Durch diese Rückströmung der Heizluft kann beispielsweise der Temperatursensor 224 gekühlt werden, so dass zunächst scheinbar keinerlei Veranlassung besteht, den Brenner des Luftheizgerätes abzuschalten. Die in umgekehrter Richtung strömende Heizluft gelangt in den Bereich temperaturempfindlicher Komponenten des Steuergerätes 260, was letztlich zu einer Beschädigung beziehungsweise zu einem Ausfall des Steuergerätes 260 führen kann.

Die Erfindung verwendet die von dem Temperatursensor 258 erfasst Temperaturinformation, um eine solche Situation zu vermeiden. Hierzu kann beispielsweise der zeitliche Temperaturanstieg im Bereich des Temperatursensors 258 im Steuergerät 260 überwacht werden. Beim Überschreiten eines Grenzwertes des Gradienten wird als Maßnahme der Brenner in einen Betriebszustand mit geringerer Heizleistung überführt; der Brenner wird beispielsweise abgeschaltet. Optional kann ein Kühlnachlauf durchgeführt werden. Ebenfalls ist es alternativ beziehungsweise zusätzlich möglich, der durch die Strömungsumkehr herbeigeführten Situation dann Rechnung zu tragen, wenn die Temperatur des Temperatursensors 258 einen bestimmten absoluten Grenzwert überschreitet.

Figur 13 zeigt ein Flussdiagramm zur Erläuterung eines erfindungsgemäßen Verfahrens zum Erkennen rückströmender Heizluft durch ein Luftheizgerät. Ausgehend von einem Regelbetrieb des Steuergerätes wird im Rahmen des erfindungsgemäßen Verfahrens bestimmt, ob der zeitliche Temperaturgradient du/dt größer ist als ein maximaler Temperaturgradient (dυ/dt)_{MAX}. Ist dies der Fall, so kann das Heizgerät beispielweise abgeschaltet werden. Im anderen Fall kann eine weitere Überprüfung erfolgen; es wird geprüft, ob die absolute Temperatur u größer ist als eine Maximaltemperatur υ_{MAX}. Ist dies der Fall, so kann dies auch als Kriterium verwendet werden, das Heizgerät beispielsweise abzuschalten. Falls nicht, so wird zum normalen Regelbetrieb übergegangen, was auch bedeutet, dass nachfolgend wiederum die bereits geschilderte erfindungsgemäße Überprüfung stattfindet.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 10: Fahrzeugheizung
- 12: Zusatzheizung
- 14: Mischkammer
- 16: Abluftöffnung
- 18: Umschaltklappe
- 20: Umschaltklappe
- 22: Druckdifferenzsensor
- 24: Temperatursensor
- 26: erster Bereich der Umschaltklappe
- 28: zweiter Bereich der Umschaltklappe
- 30: Öffnung
- 32: Abdeckung
- 34: Achse
- 36: Lufteintritt
- 38: Lufteintritt
- 40: Luftkanäle
- 42: Strömung
- 44: Strömung
- 46: Gegendruck
- 50: Zusatzgebläse
- 52: Strömung
- 56: Rückschlagklappe
- 58: Temperaturfühler
- 60: Steuergerät
- 62: Gebläse
- 64: Druckleitung
- 66: Druck vor der Luftzusatzheizung
- 68: Druck hinter der Luftzusatzheizung
- 70: Wärmeübertrager
- 110: Fahrzeugheizung
- 112: Zusatzheizung
- 114: Mischkammer
- 136: Lufteintritt
- 138: Lufteintritt
- 140: Luftkanäle
- 142: Strömung
- 144: Strömung
- 146: Gegendruck
- 210: Fahrzeugheizung
- 224: Temperatursensor
- 258: Temperatursensor
- 260: Steuergerät
- 262: Gebläse
- 270: Wärmeübertrager
- 272: Volumenelement

## Patentansprüche

1. Luftheizgerät mit
- einem Brenner,
- einem Wärmeübertrager (270),
- einem Lufteintrittsbereich,
- einem Luftaustrittsbereich,
- einem Steuergerät (260) und
- einem im Lufteintrittsbereich angeordneten Temperatursensor (258),
- wobei die Temperatur im Lufteintrittsbereich mittels des im Lufteintrittsbereich angeordneten Temperatursensors (258) überwacht wird und beim Überschreiten eines Grenzwertes durch eine temperaturabhängige Größe der Brenner in einen Zustand mit niedrigerer Heizleistung überführt wird,
**dadurch gekennzeichnet, dass** als temperaturabhängige Größe der zeitliche Temperaturgradient verwendet wird.

2. Luftheizgerät nach Anspruch 1, **dadurch gekennzeichnet, dass** beim Überschreiten eines Grenzwertes durch eine temperaturabhängige Größe der Brenner abgeschaltet wird.

3. Luftheizgerät nach Anspruch 1 oder 2, **dadurch gekennzeichnet, dass** als zusätzliche temperaturabhängige Größe die Temperatur selbst verwendet wird, so dass beim Überschreiten einer maximalen Temperatur der Brenner abgeschaltet wird.

4. Luftheizgerät nach einem der vorangehenden Ansprüche, **dadurch gekennzeichnet, dass** mit beziehungsweise nach dem Überführen des Brenners in einen Zustand mit niedrigerer Heizleistung ein Kühlnachlauf durchgeführt wird.

5. Verfahren zum Erkennen rückströmender Heizluft durch ein Luftheizgerät (210), bei dem
- die Temperatur in einem Lufteintrittsbereich mittels eines im Lufteintrittsbereich angeordneten Temperatursensors (258) überwacht wird und
- beim Überschreiten eines Grenzwertes durch eine temperaturabhängige Größe der Brenner des Luftheizgerätes (210) in einen Zustand mit niedrigerer Heizleistung überführt wird,
**dadurch gekennzeichnet, dass** als temperaturabhängige Größe der zeitliche Temperaturgradient verwendet wird.

6. Verfahren nach Anspruch 5, **dadurch gekennzeichnet, dass** beim Überschreiten eines Grenzwertes durch eine temperaturabhängige Größe der Brenner abgeschaltet wird.

7. Verfahren nach Anspruch 5 oder 6, **dadurch gekennzeichnet, dass** als zusätzliche temperaturabhängige Größe die Temperatur selbst verwendet wird, so dass beim Überschreiten einer maximalen Temperatur der Brenner abgeschaltet wird.

8. Verfahren nach einem der Ansprüche 5 bis 7, **dadurch gekennzeichnet, dass** mit beziehungsweise nach dem Überführen des Brenners in einen Zustand mit niedrigerer Heizleistung ein Kühlnachlauf durchgeführt wird.
